(19) Europäisches Patentamt
European Patent Office
Office européen des brevets

(11) **EP 2 189 915 A1**

(12) **EUROPEAN PATENT APPLICATION**

(43) Date of publication:
**26.05.2010 Bulletin 2010/21**

(51) Int Cl.:
***G06F 17/30*** *(2006.01)*

(21) Application number: **08305838.8**

(22) Date of filing: **25.11.2008**

| | |
|---|---|
| (84) Designated Contracting States: **AT BE BG CH CY CZ DE DK EE ES FI FR GB GR HR HU IE IS IT LI LT LU LV MC MT NL NO PL PT RO SE SI SK TR** Designated Extension States: **AL BA MK RS** | (71) Applicant: **FRANCE TELECOM** **75015 Paris (FR)** (72) Inventor: **Brezmes Llecha, M.Thomas 08005, BARCELONA (ES)** |

(54) **Method and terminal for performing a service relative to a specific broadcasted digital signal**

(57)    The invention relates to a method for performing a service on a user terminal, said service being delivered by at least one service provider, said method comprising a preliminary act of accessing from said user terminal a services table inside of which each of a plurality of services provided by the service provider is identified by a couple of data, a first data representative of an identity code of the service, and a second data representative of a link for accessing said service.

According to the invention, the method further comprises the acts of:
■ detecting using the user terminal one digital signal diffused by the service provider, said digital signal comprising an identity code for a service to be performed ;
■ retrieving the service corresponding to the identity code using the services table, and;
■ performing the retrieved service using the link corresponding in the services table to said retrieved service.

Fig.1

**Description**

**FIELD OF THE PRESENT INVENTION:**

The present invention generally relates to telecommunication services and more specifically, to services that can be pushed on a communication device, for example a mobile phone.

**BACKGROUND OF THE PRESENT INVENTION:**

Today, data services that are available or accessible using a mobile are growing at a low pace.

Indeed, several technology enablers are needed to offer attractive and user friendly services, like downloads (tunes, games, music, screensavers, etc.) that are the most relevant data services in expansion currently.

One of the main drawbacks in the mobile services segment is poor user friendly interfaces. For instance, when a user has to input an URL (Uniform Resource Locator: a link pointing an address on the Internet) using its mobile phone keypad, it is a complicated task.

That's why alternative techniques are now used for some download services like sending a keyword trough a SMS (for "Short Message Service") to a specific/predefined short number. But, again the user needs to remember the short number and keyword, write them down in a message, send it and some times has to pay for it.

Moreover, it is the user who has to decide to access a specific service using one of the interfaces of its terminal, and for most of the common user, there is still a lack of knowledge for managing an access or use of such a service.

**SUMMARY OF THE PRESENT METHOD AND TERMINAL:**

It is an objective of the present method and terminal to overcome disadvantages and/or make improvements other the prior art.

Indeed, as an alternative to overcome the difficulties mentioned above, the present invention provides a user friendly access for mobile phone users to specific services that can be remotely used with limited knowledge on the mobile phone of a user.

It is also an objective of the present method and terminal according to the invention to offer a proactive service that could dynamically help the user for providing him some services/ information within its mobile phone user interface, without any action on its mobile phone interface.

The following method/terminal will allow an automatic decoding of a specific signal (for instance a sound signal) that has been broadcasted by a service provider and detected by a user terminal device (its mobile phone for instance), for performing a predefined and/or specific task or service.

To that extend, the present method relates to a method for performing a service on a user terminal, said service being delivered by at least one service provider, said method comprising a preliminary act of accessing from said user terminal a services table inside of which each of a plurality of services provided by the service provider is identified by a couple of data, a first data representative of an identity code of the service, and a second data representative of a link for accessing said service.

According to the invention, the method further comprising the acts of:

■ detecting using the user terminal one digital signal diffused by the service provider, said digital signal comprising an identity code for a service to be performed ;
■ retrieving the service corresponding to the identity code using the services table, and;
■ performing the retrieved service using the link corresponding in the services table to said retrieved service.

This invention could be used in any service where a small code number has to be sent to a mobile handset using speakers and the embedded device microphone (over TVs, radios, PCs with web browsers, other mobile phones, and general public facilities like airports, train stations, etc.).

Thus, any data service that can use a code number to specify an action can benefit from this invention.

Public facilities like international airports, sport stadiums, museums, etc. can also benefit from this innovation since the users can read specific messages on the mobile (with multiple languages) based on the digital signal, for instance and without any limitation, a DTMF (for "Dual Tone Multi frequency") tones broadcasted by facilities' speakers: i.e. "Last call for passengers of flight Air France XXX with destination Madrid on gate XX", for instance.

One main advantage of using a DTMF tone or audio digital signal is that it is a standard in telephony and a well know basic robust audio pattern. If is of course just one option for implementation, and all other digital signal types could be used -all different tone codes in analogy audio format that can be represented as a digital code).

One example appliance is exposed based on an automatic music downloads service which is only given as a possible illustration of the method according to the invention, and must not be considered by the reader as a restrictive possible appliance.

Within this example, an operator can establish with radio stations and TV channels an agreement in order to add a digital signal, for instance a DTMF (for "Dual-Tone Multi-frequency") tone, just after the songs broadcasted (there will be a different code number for each song).

In order to use this service, the customers may subscribe to the service and download a mobile application (i.e. java application, etc.).

When the user turns on its terminal, for instance its mobile phone, he could have the choice to activate the automatic detection of audio signal patterns for accessing dynamically to services sent by services providers. When he activates such automatic detection, a detection module will be activated for detecting in the mobile phone environment, a digital audio signal corresponding to a service proposed by a service provider. The detection of the digital audio signal will be done advantageously using the speaker(s) of the user terminal, for instance the speakers of its mobile phone.

Every time the user opens the application, the application will activate the microphone and remain active for automatic detection of a digital audio signal, for instance and without any limitation, a DTMF tone.

Then, as soon as it has detected the DTMF signal (tone), it will decode the sound signal to obtain a service identity code previously encoded within the signal. Then, it will match it with a predefined service provided by the service provider.

Then, the predefined service will be accessed and/ or performed by the user terminal (a mobile phone, for instance), in the present example, it will show on the screen of the user terminal some information relative to that song along with an option button to buy that song from the music operator service.

So, the user will only need to activate the application when hearing the radio station or TV channel and once recognized the song, just push the button to download it.

In a preferred embodiment of the invention, the preliminary act of accessing the services table further comprises the acts of:

■ downloading the services table from the service provider using a communication network;
■ storing the services table into a memory of the user terminal.

It is indeed important for the terminal to store some data that give it access or maintained a link to the service that could be delivered by a service provider.

In a preferred embodiment of the invention, the act of detecting the digital signal comprises an act of extracting from said digital signal the identity code corresponding to the service to be performed.

Thus, the digital signal that have been sent by the server provider is formatted in format that could be diffused easily using broadcasting speakers (TV/ Audio, Web access PC speakers, in building speakers, etc.) and then easily detected by a user terminal that will performed the service corresponding to the identity code contained in the DTMF signal, and more generally in the audio digital signal.

The use of such a services table is particularly advantageous since it is first easy to maintain by a service provider (for modification or adding) and second, for a quick access to the right service which is one key objective of the invention since the service must be delivered in an automatic and/or proactive way by the service provider within the user terminal device, as soon as the terminal device will detect a DTMF signal that contains the service identity code of the service to perform.

In advantageously embodiment of the invention, the services table being stored on a server terminal of the service provider, and wherein the act of performing the retrieved service comprises the preliminary acts of:

■ sending a link request to the server terminal, said link request comprising the retrieved service identity code,
■ receiving in return the second data representative of a link for accessing the retrieved service.

By this way, the service provider keeps a total control and management on the content of the services table, being sure this content is updated. This is from crucial importance for critical services to be provided to end users, more specifically when the service provider must provide to end-users some new services. Having a complete control and management on its services tables stored on a terminal device belonging to him being thus easier.

In a possible alternative embodiment of the invention, the services table being stored both on the user terminal and a server terminal of the service provider, the said method comprises an act of measuring the consistency between the services tables respectively stored on said user terminal and on said server terminal, said method further comprising, when said services tables are different a further act of updating the services table stored on the user terminal by downloading the updated data contained in the services table stored on the said server terminal.

It is indeed from crucial importance to keep the services table updated at the user side, maintaining a perfect consistency with the reference services table stored at the service provider side. Moreover, in case of consistency between services tables respectively stored on the end-user and service provider sides, the time to access and/or perform the service corresponding to the service identity code, will be faster and without any previous request for update.

In another preferred embodiment of the invention, the method also comprises a preliminary act of associating in the said services table each first data representative of an identity code of a service with each second data representative of a link for accessing the said service, respectively.

This is thus an advantage for the service provider to maintain such a services table for an easy way of access to the services it can deliver.

In another advantageous embodiment of the invention, in the act of retrieving the identity code from said audio digital signal, the user terminal applies frequency filters for filtering said identity code comprised in the said audio signal. Since the application scenario pursues ubiquity, a robust coding/decoding terminal should be used in order to avoid interferences from other audio sources, such technical approach based on the use of known frequency filtering algorithm authorizing to easily distinguish between the signal that could be capture in a nosy environment (for instance, the room of an airport, etc.) and the signal representing the service identity code.

The invention also relates to a terminal for performing a service provided by a service provider comprising means for connecting a communication network.

According to the invention, such a terminal comprises:

■ means for accessing a services table inside of which each of a plurality of services provided the service provider is identified by a couple of data, a first data representative of an identity code of the service, and a second data representative of a link for accessing said service :

■ means for detecting one digital signal diffused by the service provider, said digital signal comprising an identity code for a service to be performed ;
■ means for retrieving the service corresponding to the identity code using the services table, and;
■ means for performing the retrieved service using the link corresponding in the services table to said retrieved service.

In a preferred embodiment of the invention, the digital signal being diffused under the form of an audio digital signal, means for detecting use at least one microphone of the said terminal for detecting audio signals. This is particularly interesting in the sense the user will just have to activate the detecting function for audio digital signals on its terminal, for instance its mobile phone, and then the microphone of the mobile phone will be able to detect and capture the audio digital signal that are diffused within the environment of the mobile phone and that correspond to service to be dynamically performed or access by the user terminal.

In an advantageous embodiment of the invention, the terminal also comprises:

■ means for downloading the services table from the service provider using a communication network;
■ means for storing the services table into a memory of the user terminal.

The invention also relates to a computer readable carrier including computer program instructions that cause a computer to implement a method, as described above, for performing a service on a user terminal as mentioned above, said service being delivered by at least one service provider, said method comprising a preliminary act of accessing from said user terminal a services table inside of which each of a plurality of services provided by the service provider is identified by a couple of data, a first data representative of an identity code of the service, and a second data representative of a link for accessing said service.

All combination of all the aforementioned technical characteristics could be considered without any restriction respectively for the method and terminal, being thus in the scope of the present invention.

**BRIEF DESCRIPTION OF THE DRAWINGS**

The present terminal and method are explained in further detail, and by way of example, with reference to the accompanying drawings wherein:

FIG. 1 shows an illustration of an embodiment of the system for performing a service on a user terminal connected to a communication network, the said service being delivered by at least one service provider, according to the invention;

FIG. 2 shows a flow diagram illustrating an embodiment of the present method for performing a service on a user terminal connected to a communication network, the said service being delivered by at least one service provider, according to the invention.

FIG. 3 shows a diagram that lists the main steps performed by a user terminal for activating a service aiming at automatic detection of a service delivered by a service provider using digital audio signal diffusion within the user terminal environment.

**DETAILED DESCRIPTION OF THE PREFERRED EMBODIMENTS:**

The following are descriptions of exemplary embodiments that when taken in conjunction with the drawings will demonstrate the above noted features and advantages of the method and terminal according to the invention, and introduce further ones.

In the following description, for purpose of explanation rather than limitation, specific details are set forth such as architecture, interfaces, techniques, etc., for illustration. However, it will be apparent to that ordinary skill in the art that other embodiments that depart from these details would still be understood to be within the scope of the appended claims.

It should also be expressly understood that the drawings are included for illustrative purposes and do not represent the scope of the present invention.

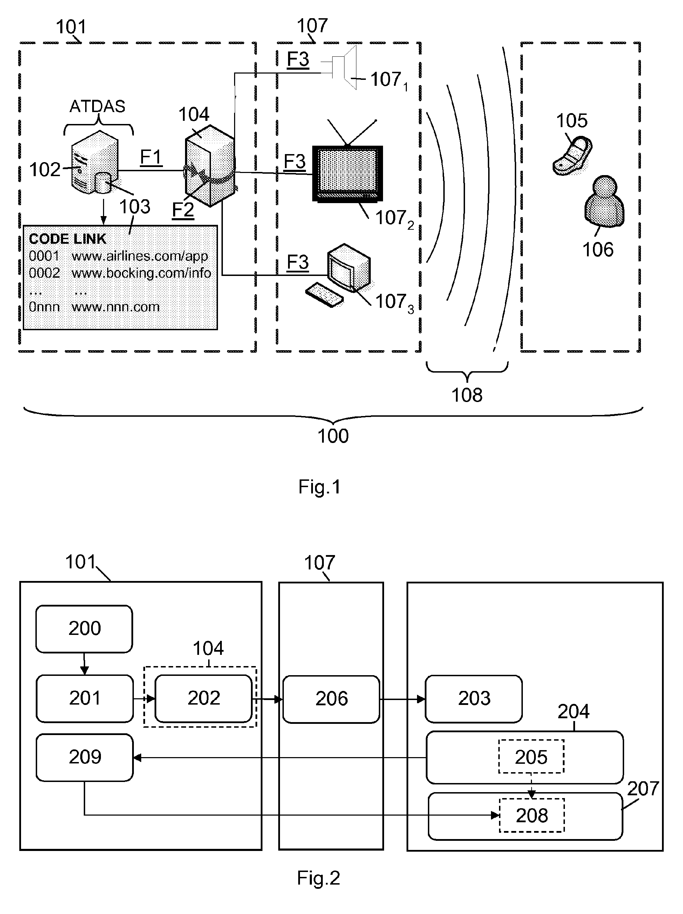

FIG. 1 shows the architecture and components involved within the system 100 according to the invention.

The service provider 101 will host two main nodes: a services table(s) database 103, also named services or services table(s) in the following, and an application Server 102 (referred as ATDAS on FIG.1).

In this server 102 will reside the logic as well as the services tables 103.

The services table database 103 establishes a link between a service identity code and a service to perform, when decoded by a user terminal 105 of a user 106, and will be downloaded to the mobile client 105 (if not updated) at the beginning of each session.

The application server 102 will perform the following functions:

- compose the services table(s) 103, with their codes and actions;
- enables adding, editing or erasing services table(s) in the services table(s) database 103;
- hosts an internet server with access to services table(s) to be accessed directly from the end user mobile application;
- manages the connection with a media gateway 104 in order to send the services table(s);
- enables system operator access as well as third party service providers 101 using a web interface with strong security;
- system monitoring;
- generates billing information.

The system 100 also comprises a media gateway 104, making an interface between the service provider 101 and a broadcaster 107, which will receive from the application server 102 the files including the service tables 103 for each broadcaster and which will codify the service identity codes contained in the services table 103 into a recorded DTMF audio file or signal formatted for the specific broadcaster 107.

Once formatted will store these files and will send them to the broadcasters 107 in order to be broadcasted on TV, radio, facilities speakers $107_1$, $107_2$, etc. when appropriate or be posted on web pages $107_3$.

The broadcaster 107 will receive the files from the Media Gateway 104 and will broadcast 108 the DTMF signal (s) through the specified interface when required.

The mobile application running on the user terminal 105 will have a user interface enabling the user 106 to change the status to "active" for a specific service provider 101.

The application will connect to this service provider 101 through mobile or wireless data networks (GPRS, UMTS, WI-FI, etc.) and will check for services table updates, when not updated will download the file from the web server offered by the application server 102.

In active mode an embedded application is runned on the user terminal and will detect an audio digital signal, for instance a DTMF tone, using the speaker of the user terminal 105 in scan mode for DTMF signal(s). When it detects one audio digital signal, it will filter right frequencies for filtering between audio signal and nose environment.

Once obtained the digital service identity code, it will check if there are some errors, if not, it will filter the service identity codes relative to the selected service provider 101.

Finally, a mapping between the service identity code and the service to be accessed and/or performed will permit to the user terminal to perform the service.

Here is described, step by step, the way a user 106 can benefit the service that is accessible within its mobile phone 105, based on the method and system according to the invention.

The user 106 will have installed on his mobile phone 105 an application aiming at accessing and/or performing services delivered by different service providers.

The steps of the process for a specific service provider A (i.e. an airport operation manager company) are described below:

1. The service provider 101 sends (arrow $\underline{F1}$ on FIG.1) a code to the media gateway 104 indicating at least one output interface.
2. The media gateway 104 translates (arrow $\underline{F2}$ on FIG.1) this digital code into a DTMF signal (audio format) output and sends (arrow $\underline{F3}$ on FIG.1) it to specified interface or interfaces ($107_1$, $107_2$, $107_3$).
3. The user 106 starts the client application in his mobile handset 105 and selects the service provider 101, once updated the services table 103 through data connection, the application remains active, scanning through the microphone of the user terminal 105 the DTMF signals comprising the service identity code(s).
4. The DTMF signals are diffused through the speakers of the specified outputs ($107_1$, $107_2$, $107_3$).
5. The client application through the mobile phone microphone decodes the DTMF signal and based on the services table, accesses and/or performs the specified corresponding service.

Moreover, since the application scenario pursues ubiquity, a robust coding/decoding system should be used in order to avoid interferences from other audio sources:

- audio interferences: three main techniques will be use to avoid audio interferences:

■ DTMF signals alone are robust by definition, since the tone frequencies, as defined by the Precise Tone Plan, are selected such that harmonics and intermodulation products will not cause an unreliable signal. No frequency is a multiple of another, the difference between any two frequencies does not equal any of the frequencies, and the sum of any two frequencies does not equal any of the frequencies;
■ audio filtering will be done when decoding the DTMF signal, so the frequencies may not vary more than $\pm1.8\%$ from their nominal frequency, or the application will ignore the signal;

- Once the tones are decoded to decimal numbers, error detection techniques like for instance, hamming mod eleven code with two check digits will be used, or any other techniques known by the skill person in the art.

This code allows 9 decimal digit information plus 2 check digits that will be added as numbers at the end of the code.
So for instance, if a loud noise is listened during a code being broadcasted, the mobile client will detect the errors with accuracy higher than 99%.
In order to have mod eleven digits the standard DTMF pattern used in phone keypad will be used, changing the star (*) by the $11^{th}$ digit, as represented in table 1 of annex A.
Other algorithms could be used, and if adding more check digits the mobile application could even correct some error digits.

- Filtering of codes coming from unwanted service providers 101 or noisy environments: to avoid this, each code will start with a unique number referred to the service provider 101, similarly as used in short number services on mobile networks.

So, based on the number of service providers expected, and a regulation made by a defined organization, each service provider 101 will have a unique identifier that will be included at the beginning of the code.
Thus, when the application starts listening codes, it automatically will filter out those codes that are different from the service provider code selected on the profile of the application, and will just use the code that matches with the profile performing the action defined on the services table(s). In this case we propose to use 4 digits for different service providers (up to 10.000).
So, taking in to account the above techniques, an eleven digit code format is proposed and each digit will mean the following:

$$d_1\ d_2\ d_3\ d_4\ d_5\ d_6\ d_7\ d_8\ d_9\ d_{10}\ d_{11}$$

From digit 1 to digit 4: service provider identifier (up to 10.000 different providers).
From digit 5 to digit 9: service identifier (up to 100.000 different actions).
Digits 10 and 11: check control digits (99% accuracy in error detection).
Other code format could be used, balancing the nine digit data between service provider identifiers and service identifiers.
The following technical information may be helpfull for a better understanding of how services tables 103 are formatted for implementing the method and system according to the invention.

The services table 103 will be host on the ATDAS 102 of the Service Provider 101. For a specific service this services table 103 may be the same as the one running on the user terminal 105. So, before using the service, first the mobile client has to check that it has the last version of the services table for the specific service.

The services table is stored on a file that could have the following structure:

| Field name | Field Type |
|---|---|
| Service (Name of the service) | Alphanumeric String |
| Version (Version of the services table(s)) | Integer |
| Code 1 (Sequential code) | Integer |
| Action 1 (Action to perform: open web browser, open application, etc.)) | Alphanumeric String |
| Data 1 (Specific data for an action: URL, parameters, etc.) | Data structure |
| Code 2 (Sequential code) | Integer |
| Action 2 (Action to perform: open web browser, open application, etc.)) | Alphanumeric String |
| Data 2 (Specific data for an action: URL, parameters, etc.) | Data structure |
| ... | |

A possible and not restrictive way for implementing the system according the invention is given above.

Concerning the services table database and the application server (ATDAS) - A possible software implementation of the server could be as follows:

■ PC with Windows XP server with the following applications:
■ MySQL server with these databases:

- User profiles (user, password, billing info, etc.);
- Services table(s);
- Service gateways;

■ Tomcat server:

- Web server for remote managing and monitoring;
- FTP server for end users to download services table(s);
- Web server for end users to access their service profile;
- Web server for broadcasters to manage their own services table(s) (create, edit, delete, etc.);
- Java application running the logic on the system (generate codes, send codes to media gateway, etc.);
- Billing platform accessing MySQL database.

The media Gateway 104 will receive the services table(s) 103 for all the services of each broadcaster from the ATDAS. As soon as the Media Gateway receives these tables, it will convert each code of the services table(s) on to a DTMF audio file. Right after that it will send the services table(s) and DTMF audio files (services table(s) and DTMF audio files are sent together just for coherence checking issues) to the related broadcasters.

In order to generate the DTMF audio files a specific audio wave generator application will be used, this application allows inputting different frequency tones with a fixed duration. So specifying in an ordered sequence the multi frequency tones for each digit of the code (once added Service provider identifier, action identifier and check control digits) as explained in the code formatting section and using the definition of Table I (See Annex A), the output will be an audio file with DTMF tones representing the original code.

A possible software implementation for the media gateway could be as follows:

■ PC with Windows XP server with the following applications:

• Tomcat server

- Web server for remote managing and monitoring

- Communications front end (with ATDAS and with broadcasters IT systems)

- Java application running the logic on the system (generate audio DTMF files, send files to the communications front end, etc.).

Concerning the broadcaster 107, it should have at least a server to receive audio files (and services table(s) associated) from the Media Gateway 104 and to manage their services table(s) remotely over the ATDAS.
Once received the services table(s) with their audio files, it will be the broadcaster's task to broadcast 108 those audios over TV, internet or distributed speaker systems.
A possible software implementation for the broadcaster server could be as follows:

■ PC with Windows XP server with the following applications:

➢ Apache server (for receiving services table(s) and audio files)
➢ Web browser
➢ Java application running the logic on the system (broacast time plan, etc.)

Concerning the mobile client application running on the user terminal 105, it will allow the user 106 to select the services for a specific service provider 101, when launching the application. Right after that, the application will check against the ATDAS the services table(s) version for this service (the user must be subscribed) and in case the version doesn't match, download the last version of the services table(s) from the ATDAS.
Once done this, the mobile application will activate the microphone of the user terminal 105 and will remain active, scanning for new incoming DTMF signal containing service identity codes corresponding to a service to be accessed and/or performed using the user terminal 105.
The code formatting presented on previous sections of this document will allow not only to differentiate from other service providers, but from other natural noise sources (pure tones during a fixed period of time are rarely find in daily noise environments).
When the application will detect a service identity code related to a service, it will look at the services table(s) stored on the mobile phone 105 for that service and will access and/or perform automatically or demanding the user 106, the corresponding service associated to that service identity code.
Another possible variant of implementation could be as follows: the mobile phone does not store any services table(s) and each time it decodes a code from a specific service, it connects to the ATDAS to receive the corresponding service to access and/ or to perform.
A possible software implementation for the mobile application could be as follows:

- Mobile phone compatible with J2ME (trademark);
- J2ME application performing the following tasks:

■ communication with the client application over data channel to ATDAS (GPRS, UMTS, etc.);
■ storage of the services table(s);
■ algorithms to decode the DTMF audio captured with the microphone;
■ APIs to perform required actions;
■ logic of the overall application.

FIG. 2 shows a flow diagram illustrating an embodiment of the present methods for performing a service on a user terminal connected to a communication network, the said service being delivered by at least one service provider.
According to the invention, the said method comprises for the said service the acts of:

■ sending 201, by the service provider 101, one DTMF signal comprising an identity code of the said service, the said DTFM signal being associated with a data indicating at least one output interface of a broadcaster ;
■ detecting 203 automatically, using the user terminal 105, the said DTFM signal when it is diffused using the said at least indicated output interface. This act of detecting 203 performed by the user terminal 105 comprises a step 204 of extracting from the said DTMF signal the said identity code corresponding to the said predefined service. During the step 204 of extracting the said identity code from the said DTMF signal, the said user terminal applies 205 frequency filters for filtering the said identity code comprised in the said DTMF signal from nose;
■ translating 202, by a translation interface 104 (Media Gateway)making an interface between the said service provider 101 and the broadcaster 107, the said digital signal in the form of a DTMF signal and sending of the said DTMF signal to the said broadcaster 107;

■ diffusing 206 of the said DTMF signal, by the said broadcaster 107, using the said indicated at least one output interface.

■ Accessing and/or performing 207 the predefined service corresponding to the said identity code, using the said user terminal 105. This act of performing the predefined service comprises a step 208 of retrieving the said predefined service to be performed, in a services table inside which, each of the services provided by the service provider is identified by a couple of data, a first data representative of an identity code of the service, and a second data representative of a link for accessing the said service. Two main alternatives for accessing and/or performing the service using the user terminal are proposed for the method according to the invention :

- In the first one, the said services table(s) 103 being stored on a server terminal 102 of the service provider 101, the method comprises before the act of accessing and/or performing the said predefined service, the act of sending 209, by the user terminal 105, a request to the said server terminal 102, the said request comprising the said service identity code, for receiving by return the said second data representative of a link for accessing the said service corresponding to the said identity code, using the said communication network;
- In the second one, the said services table(s) 103 being stored both on the user terminal 105 and server terminal 102 of the service provider 101, if the services table(s) 103 respectively stored on the user terminal 105 and on the server terminal 102 are different, it comprises before the act of performing the said predefined service, the act of updating the services table(s) stored on the user terminal 105 by downloading the updated data contained in the services table(s) stored on the said server terminal 102, using the said communication network.

Preliminary to all the above-mentioned acts, the method according to the invention comprises a preliminary act 200 of associating in the said services table each first data representative of an identity code of a service with each second data representative of a link for accessing the said service, respectively.

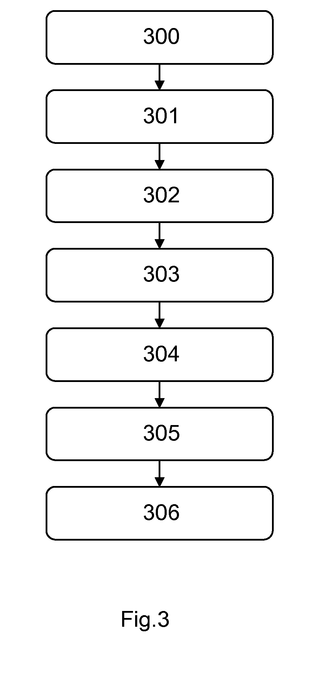

FIG. 3 shows a diagram that lists the main steps performed by a user terminal for activating a service aiming at automatic detection of a service delivered by a service provider using digital audio signal diffusion within the user terminal environment.

First, when the user terminal is turned on by the user, the automatic detection of a service delivered by a service provider is activated 300 using a service activation functionality of the user terminal.

Then a module application running on the terminal is executed 301 for hearing at audio digital signals that could be diffused in the terminal environment by a service provider.

For detecting such diffused audio digital signal, the module application collaborated with the speaker(s) of the user terminal, such speaker(s) being previously activated 302 for capturing external audio signals, such as DTMF tone.

Then the user terminal is ready 304 for automatic detection of diffused audio digital signal, so that when a DTMF tone is detected by the terminal, the terminal will extract 305 from the DTMF signal an identity code corresponding to a service to be performed and/ or an message to be accessed, will the retrieve 306 using the identity code and the services table, a link to the service to be performed or accessed, and will execute the said identified service.

### Annex A

Table I: DTMF frequencies

|  | 1209 Hz | 1336 Hz | 1477 Hz |
|---|---|---|---|
| 697 Hz | 1 | 2 | 3 |
| 770 Hz | 4 | 5 | 6 |
| 852 Hz | 7 | 8 | 9 |
| 941 Hz | 11 | 0 | Not used |

### Claims

1. A method for performing a service on a user terminal, said service being delivered by at least one service provider, said method comprising a preliminary act of accessing from said user terminal a services table inside of which each of a plurality of services provided by the service provider is identified by a couple of data, a first data representative of an identity code of the service, and a second data representative of a link for accessing said service, the method further comprising the acts of:

> ■ detecting using the user terminal one digital signal diffused by the service provider, said digital signal comprising an identity code for a service to be performed ;
> ■ retrieving the service corresponding to the identity code using the services table, and;
> ■ performing the retrieved service using the link corresponding in the services table to said retrieved service.

2. The method of claim 1, wherein the preliminary act of accessing the services table further comprises the acts of:

> ■ downloading the services table from the service provider using a communication network;
> ■ storing the services table into a memory of the user terminal.

3. The method of claim 2, wherein the act of detecting the digital signal comprises an act of extracting from said digital signal the identity code corresponding to the service to be performed.

4. The method of claim 2, wherein the digital signal is a digital audio signal, and wherein in the act of retrieving the identity code from said audio signal, the user terminal applies frequency filters for filtering said identity code comprised in the said audio signal.

5. The method of claim 1, the services table being stored on a server terminal of the service provider, and wherein the act of performing the retrieved service comprises the preliminary acts of:

> ■ sending a link request to the server terminal, said link request comprising the retrieved service identity code,
> ■ receiving in return the second data representative of a link for accessing the retrieved service.

6. The method of claim 2, the services table being stored both on the user terminal and a server terminal of the service provider, the said method comprises an act of measuring the consistency between the services tables respectively stored on said user terminal and on said server terminal, said method further comprising, when said services tables are different a further act of updating the services table stored on the user terminal by downloading the updated data contained in the services table stored on the said server terminal.

7. A terminal for performing a service provided by a service provider comprising means for connecting a communication network, wherein the said terminal comprises:

> ■ means for accessing a services table inside of which each of a plurality of services provided the service provider is identified by a couple of data, a first data representative of an identity code of the service, and a second data representative of a link for accessing said service :
> ■ means for detecting one digital signal diffused by the service provider, said digital signal comprising an identity code for a service to be performed ;
> ■ means for retrieving the service corresponding to the identity code using the services table, and;
> ■ means for performing the retrieved service using the link corresponding in the services table to said retrieved service.

8. The terminal of claim 7, wherein the digital signal being diffused under the form of an audio digital signal, means for detecting use at least one microphone of the said terminal for detecting audio signals.

9. The terminal of claim 8, wherein it comprises:

> ■ means for downloading the services table from the service provider using a communication network;
> ■ means for storing the services table into a memory of the user terminal.

10. A computer readable carrier including computer program instructions that cause a computer to implement a method according to claims 1 to 6, for performing a service on a user terminal, said service being delivered by at least one service provider, said method comprising a preliminary act of accessing from said user terminal a services table inside of which each of a plurality of services provided by the service provider is identified by a couple of data, a first data representative of an identity code of the service, and a second data representative of a link for accessing said service.

**Fig.1**

**Fig.2**

| 300 |
|-----|

↓

| 301 |
|-----|

↓

| 302 |
|-----|

↓

| 303 |
|-----|

↓

| 304 |
|-----|

↓

| 305 |
|-----|

↓

| 306 |
|-----|

Fig.3

Europäisches
Patentamt

European
Patent Office

Office européen
des brevets

**EUROPEAN SEARCH REPORT**

Application Number

EP 08 30 5838

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 213 646 A (HEWLETT PACKARD CO [US]) 12 June 2002 (2002-06-12) * paragraph [0010]; figure 1 * * paragraph [0024] - paragraph [0030]; figure 5 * * paragraph [0033] - paragraph [0035] * | 1-10 | INV. G06F17/30 |
| X | JP 11 119974 A (SONY CORP) 30 April 1999 (1999-04-30) * paragraph [0012] - paragraph [0014] * * paragraph [0036] - paragraph [0047]; figures 7-10 * | 1-10 | |
| X | US 6 163 803 A (WATANABE KOICHIRO [JP]) 19 December 2000 (2000-12-19) * column 7, paragraph 65 - column 9, paragraph 56; figures 4-6 * | 1-10 | |
| A | WO 97/32427 A (NETPHONIC COMMUNICATIONS INC [US]) 4 September 1997 (1997-09-04) * page 3, line 2 - line 17; figure 1 * * page 5, line 1 - line 29 * * page 8 - page 14 * | 1-10 | TECHNICAL FIELDS SEARCHED (IPC) H04L G06F |
| A | EP 0 859 500 A (LUCENT TECHNOLOGIES INC [US]) 19 August 1998 (1998-08-19) * column 4, line 38 - column 5, line 2; figure 2 * | 1-10 | |

The present search report has been drawn up for all claims

| Place of search | Date of completion of the search | Examiner |
|---|---|---|
| Berlin | 21 April 2009 | Eraso Helguera, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 30 5838

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2009

| Patent document cited in search report | | Publication date | Patent family member(s) | | Publication date |
|---|---|---|---|---|---|
| EP 1213646 | A | 12-06-2002 | DE | 60100784 D1 | 23-10-2003 |
| | | | DE | 60100784 T2 | 15-07-2004 |
| | | | US | 2002107693 A1 | 08-08-2002 |
| JP 11119974 | A | 30-04-1999 | NONE | | |
| US 6163803 | A | 19-12-2000 | JP | 11110319 A | 23-04-1999 |
| WO 9732427 | A | 04-09-1997 | AU | 1985197 A | 16-09-1997 |
| | | | EP | 1224793 A1 | 24-07-2002 |
| | | | US | 2003103606 A1 | 05-06-2003 |
| | | | US | 6366650 B1 | 02-04-2002 |
| | | | US | 5953392 A | 14-09-1999 |
| EP 0859500 | A | 19-08-1998 | CA | 2229838 A1 | 18-08-1998 |
| | | | JP | 10271223 A | 09-10-1998 |

For more details about this annex : see Official Journal of the European Patent Office, No. 12/82